# EUROPEAN PATENT SPECIFICATION

(11) **EP 2 480 622 B1**
(45) Date of publication and mention of the grant of the patent: **18.03.2015**
(21) Application number: 10819358.2
(22) Date of filing: 22.09.2010
(51) Int. Cl.: C09K 8/36

(54) **INVERT EMULSION FLUIDS WITH HIGH INTERNAL PHASE CONCENTRATION**
UMKEHREMULSIONSFLÜSSIGKEITEN MIT HOHER INNERER PHASENKONZENTRATION
FLUIDES EN ÉMULSION INVERSE AVEC UNE CONCENTRATION DE PHASE INTERNE ÉLEVÉE

(30) Priority: 22.09.2009 US 244731 P
(43) Date of publication of application: 01.08.2012
(73) Proprietor: M.I L.L, C., Houston, TX 77072 (US)
(72) Inventor: PATEL, Arvind, D., Sugar Land, TX 77478 (US); YOUNG, Steve, Cypress, TX 77429 (US); BRUTON, Jim, Angleton, TX 77515 (US)
(74) Representative: Gill, Stephen Charles
(86) International application number: PCT/US2010/049752
(87) International publication number: WO 2011/037954

(56) References cited:
- WO-A1-2004/050790
- WO-A1-2008/086385
- WO-A1-2009/047478
- WO-A2-2004/090067
- US-A1- 2004 122 111
- US-A1- 2005 202 978
- US-A1- 2007 049 500
- US-B1- 6 291 406
- US-B2- 6 734 144

## Description

### BACKGROUND OF INVENTION

### Field of the Invention

Embodiments disclosed herein relate generally to invert emulsion wellbore fluids. In particular, embodiments disclosed herein relate to invert emulsion fluid having a high internal phase concentration.

### Background Art

During the drilling of a wellbore, various fluids are typically used in the well for a variety of functions. The fluids may be circulated through a drill pipe and drill bit into the wellbore, and then may subsequently flow upward through wellbore to the surface. During this circulation, the drilling fluid may act to remove drill cuttings from the bottom of the hole to the surface, to suspend cuttings and weighting material when circulation is interrupted, to control subsurface pressures, to maintain the integrity of the wellbore until the well section is cased and cemented, to isolate the fluids from the formation by providing sufficient hydrostatic pressure to prevent the ingress of formation fluids into the wellbore, to cool and lubricate the drill string and bit, and/or to maximize penetration rate.

In most rotary drilling procedures the drilling fluid takes the form of a "mud," *i.e.,* a liquid having solids suspended therein. The solids function to impart desired rheological properties to the drilling fluid and also to increase the density thereof in order to provide a suitable hydrostatic pressure at the bottom of the well. The drilling mud may be either a water-based or an oil-based mud.

Many types of fluids have been used in well bores particularly in connection with the drilling of oil and gas wells. The selection of an oil-based well bore fluid involves a careful balance of both the good and bad characteristics of such fluids in a particular application. The primary benefits of selecting an oil-based drilling fluid include: superior hole stability, especially in shale formations; formation of a thinner filter cake than the filter cake achieved with a water based mud; excellent lubrication of the drilling string and downhole tools; penetration of salt beds without sloughing or enlargement of the hole as well as other benefits that should be known to one of skill in the art. An_especially beneficial property of oil-based muds is their excellent lubrication qualities. These lubrication properties permit the drilling of wells having a significant vertical deviation, as is typical of off-shore or deep water drilling operations or when a horizontal well is desired. In such highly deviated holes, torque and drag on the drill string are a significant problem because the drill pipe lies against the low side of the hole, and the risk of pipe sticking is high when water based muds are used. In contrast oil-based muds provide a thin, slick filter cake which helps to prevent pipe sticking and thus the use of the oil-based mud can be justified.

Oil-based drilling fluids are generally used in the form of invert emulsion muds. The components of the invert emulsion fluids include an oleaginous liquid such as hydrocarbon oil which serves as a continuous phase, a non-oleaginous liquid such as water or brine solution which serves as a discontinuous phase, and an emulsifying agent. The oil/water ratio of invert emulsion fluids is traditionally within the range of 65/45 to 85/15. As used herein, emulsifying agent and surfactant are used interchangeably. The emulsifying agent serves to lower the interfacial tension of the liquids so that the non-oleaginous liquid may form a stable dispersion of fine droplets in the oleaginous liquid. A full description of such invert emulsions may be found in Composition and Properties of Drilling and Completion Fluids, 5th Edition, H. C. H. Darley, George R. Gray, Gulf Publishing Company, 1988, pp. 328-332. Additionally, such invert emulsion muds generally contain one or more weighting agents, surfactants, viscosifiers, fluid loss control agents or bridging agents.

The drawback to use of invert emulsion fluids is their cost (due to the oil content) and environmental concerns associated with waste and disposal (greater oil percentage may be correlated to more oil retention on drilled cuttings). However, as the oil to water ratio decreases (increased internal water phase), the viscosity of the fluid often increases beyond a workable range. Additionally, it also becomes more difficult to stabilize an invert emulsion (water-in-oil) as the water content increases. Accordingly, there exists a continuing need for invert emulsion wellbore fluids where the internal phase is present in amount greater than the external oleaginous fluid.

US 2004/0122111 proposes a method of enhancing the stability of a water-in-oil emulsion. US 6291406 proposes a well treatment fluid comprising a water-in-oil emulsion. US 6734144 proposes a method for enhancing the stability of a solids-stabilzed water-in-oil emulsion. US 2007/0049500 proposes a drilling fluid containing an aqueous phase and an oil phase and an ether carboxylic acid.

### SUMMARY OF INVENTION

In a first aspect, the present invention provides an invert emulsion wellbore fluid according to claim 1.

In another aspect, the present invention provides a method of drilling a subterranean hole with an invert emulsion drilling fluid according to claim 11.

Other aspects and advantages of the invention will be apparent from the following description and the appended claims.

### DETAILED DESCRIPTION

In one aspect, embodiments disclosed herein relate to invert emulsion fluids. As discussed above, an invert emulsion is a water-in-oil emulsion, where an oleaginous fluid serves as a continuous phase and a non-oleaginous fluid serves as a discontinuous phase, the non-oleaginous fluid being stabilized or emulsed in the oleaginous fluid by an emulsifying agent. However, in particular, embodiments disclosed herein relate to invert emulsion fluids having an oil/water ratio of less than 50/50, which may also be referred to as high internal phase ratio (HIPR) invert emulsions or high internal phase emulsions (HIPE).

The oil / water ratio in invert emulsion fluids conventionally used in the field is in the range of 65/45 to 85/15. Several factors have conventionally dictated such ranges, including: the concentration of solids in the mud to provide the desired mud weight (solids laden muds must have a high O/W ratio to keep the solids oil wet and dispersed) and the high viscosities often experienced upon increase of the internal aqueous phase (due to the greater concentration of the dispersed internal phase).

The instability of the emulsions may be explained by examining the principles of colloid chemistry. The stability of a colloidal dispersion (emulsion for a liquid-liquid dispersion) is determined by the behavior of the surface of the particle via its surface charge and short-range attractive van der Waals forces. Electrostatic repulsion prevents dispersed particles from combining into their most thermodynamically stable state of aggregration into the macroscopic form, thus rendering the dispersions metastable. Emulsions are metastable systems for which phase separation of the oil and water phases represents to the most stable thermodynamic state due to the addition of a surfactant to reduce the interfacial energy between oil and water.

Oil-in-water emulsions are typically stabilized by both electrostatic stabilization (electric double layer between the two phases) and steric stabilization (van der Waals repulsive forces), whereas invert emulsions (water-in-oil) are typically stabilized by only steric stabilization. Because only one mechanism can be used to stabilize an invert emulsion, invert emulsions are generally more difficult to stabilize, particularly at higher levels of the internal phase, and often experience highly viscous fluids.

Thus, embodiments of the present disclosure relate to invert emulsion fluids having a high internal phase concentration (< 50/50 O/W), which are stabilized by an emulsifying agent without significant increases in viscosity. Additional by virtue of the greater internal phase concentration, weight may be provided to the fluid partly through the inherent weight of the aqueous or other internal phase, thus minimizing the total solid content.

As discussed above, as the internal aqueous phase of a given fluid system increases, the viscosity and rheological profile of the fluid also increases due to the greater concentration of the dispersed internal phase. However, the invert emulsion fluids of the present disclosure may possess rheological profiles more similar to fluids having a lower internal phase concentration, *i.e.,* >50/50 O/W. In particular, in accordance with embodiments of the present disclosure, the fluids may possess a high shear viscosity of less than 200 at 600 rpm, and a low shear viscosity of less than 40 at 6 and 3 rpm, and less than 20 at 6 and 3 rpm in particular embodiments (all of which are measured using a Fann 35 Viscometer from Fann Instrument Company (Houston, Texas) at 48.9°C (120°F).

The fluid may also possess internal aqueous phase that is stably emulsed within the external oleaginous phase. Specifically, upon application of an electric field to an invert emulsion fluid, the emulsified non-oleaginous phase, which possesses charge, will migrate to one of the electrodes used to generate the electric field. The incorporation of emulsifiers in the invert emulsion fluid stabilizes the emulsion and results in a slowing of the migration rate and/or increased voltage for breakage of the emulsion. Thus, an electrical stability (ES) test, specified by the American Petroleum Institute at API Recommended Practice 13B-2, Third Edition (February 1998), is often used to determine the stability of the emulsion. ES is determined by applying a voltage-ramped, sinusoidal electrical signal across a probe (consisting of a pair of parallel flat-plate electrodes) immersed in the mud. The resulting current remains low until a threshold voltage is reached, whereupon the current rises very rapidly. This threshold voltage is referred to as the ES ("the API ES") of the mud and is defined as the voltage in peak volts-measured when the current reaches 61 µA. The test is performed by inserting the ES probe into a cup of 120°F [48.9°C] mud applying an increasing voltage (from 0 to 2000 volts) across an electrode gap in the probe. The higher the ES voltage measured for the fluid, the stronger or harder to break would be the emulsion created with the fluid, and the more stable the emulsion is. Thus, the present disclosure relates to invert emulsion fluids having a high internal phase ratio but that also have an electrical stability of at least 50 v and at least 100 v or 150 v in more particular embodiments.

Further, the present disclosure also relates to fluids having a high internal phase ratio wherein the emulsion droplet size is smaller as compared to conventional emulsion droplets. Thus, the non-oleaginous phase distributed in the oleaginous phase has an average diameter in the range of 0.5 to 5 microns, and in the range of 1 to 3 microns in one embodiment. The droplet size distribution may generally be such that at least 90% of the diameters are within 20% or especially 10% of the average diameter. In other embodiments, there may be a multimodal distribution. This droplet size may be approximately one-third to one-fourth the size of emulsion droplets formed using conventional emulsifiers. In a particular embodiment, the emulsion droplets may be smaller than the solid weighting agents used in the fluids.

One example of an emulsifying agent that may stabilize the emulsion of the aqueous or non-oleaginous fluid within the oleaginous fluid, where the non-oleaginous fluid is present in a volume amount that is more than the non-oleaginous fluid, is an alkoxylated ether acid. In embodiment of an alkoxylated ether acid is an alkoxylated fatty alcohol terminated with an carboxylic acid, represented by the following formula:

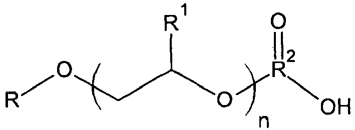

where R is C₆-C₂₄ or -C(O)R³ (where R³ is C₁₀-C₂₂), R¹ is H or C₁-C₄, R² is C₁-C₅ and n may range from 1 to 20. Such compound may be formed by the reaction of an alcohol with a polyether (such as poly(ethylene oxide), poly(propylene oxide), poly(butylene oxide), or copolymers of ethylene oxide, propylene oxide, and/or butylene oxide) to form an alkoxylated alcohol. The alkoxylated alcohol may then be reacted with an α-halocarboxylic acid (such as chloroacetic acid, chloropropionic acid, etc.) to form the alkoxylated ether acid. In a particular embodiment, the selection of n may be based on the lipophilicity of the compound and the type of polyether used in the alkoxylation. In some particular embodiments, where R¹ is H (formed from reaction with poly(ethylene oxide)), n may be 2 to 10 (between 2 and 5 in some embodiments and between 2 and 4 in more particular embodiments). In other particular embodiments, where R¹ is -CH₃, n may range up to 20 (and up to 15 in other embodiments). Further, selection of R (or R³) and R² may also depend on based on the hydrophilicity of the compound due to the extent of polyetherification (*i.e.*, number of n). In selecting each R (or R³), R¹, R², and n, the relative hydrophilicity and lipophilicity contributed by each selection may be considered so that the desired HLB value may be achieved. Further, while this emulsifier may be particularly suitable for use in creating a fluid having a greater than 50% non-oleaginous internal phase, embodiments of the present disclosure may also include invert emulsion fluids formed with such emulsifier at lower internal phase amounts.

The term "HLB" (Hydrophilic Lipophilic Balance) refers to the ratio of the hydrophilicity of the polar groups of the surface-active molecules to the hydrophobicity of the lipophilic part of the same molecules. One skilled in the art would appreciate that an HLB value may be calculated by considering the molecular weight contributions of the respective hydrophilic and lipophilic portions and taking the ratio thereof (divided by 5). Generally, the Bancroft rule applies to the behavior of emulsions: emulsifiers and emulsifying particles tend to promote dispersion of the phase in which they do not dissolve very well; for example, a compound that dissolves better in water than in oil tends to form oil-in-water emulsions (that is they promote the dispersion of oil droplets throughout a continuous phase of water). Emulsifiers are typically amphiphilic. That is, they possess both a hydrophilic portion and a hydrophobic portion. The chemistry and strength of the hydrophilic polar group compared with those of the lipophilic nonpolar group determine whether the emulsion forms as an oil-in-water or water-in-oil emulsion. In particular, emulsifiers may be evaluated based on their HLB value. Generally, to form a water-in-oil emulsion, an emulsifier (or a mixture of emulsifiers) having a low HLB, such as between 3 and 8, may be desirable. In a particular embodiment, the HLB value of the emulsifier may range from 4 to 6.

In particular embodiments, the emulsifier may be used in an amount ranging from 2.85 to 42.75 kg/m³ (1 to 15 pounds per barrel), and from 5.7 to 28.5 kg/m³ (2 to 10 pounds per barrel), in other particular embodiments.

In addition to the emulsifying agent that stabilizes the oleaginous continuous phase and non-oleaginous discontinuous phase, the wellbore fluids may also include, for example, weighting agents.

Weighting agents or density materials (other than the inherent weight provided by the internal aqueous phase) suitable for use the fluids disclosed herein may include barite, galena, hematite, magnetite, iron oxides, illmenite, siderite, celestite, dolomite, calcite, and the like. The quantity of such material added, if any, depends upon the desired density of the final composition. Typically, weighting material may be added to result in a fluid density of up to about 2.88 kg/l (24 pounds per gallon) (but up to 2.52 kg/l (21 pounds per gallon) or up to 22.8 kg/l (19 pounds per gallon) in other particular embodiments).

Additionally, it is also within the scope of the present disclosure that the fluid may also be weighted up using salts (such as in the non-oleaginous fluid (often aqueous fluid) discussed below). One having ordinary skill in the art would recognize that selection of a particular material may depend largely on the density of the material as typically, the lowest wellbore fluid viscosity at any particular density is obtained by using the highest density particles.

The oleaginous fluid may be a liquid and more preferably is a natural or synthetic oil and more preferably the oleaginous fluid is selected from the group including diesel oil; mineral oil; a synthetic oil, such as hydrogenated and unhydrogenated olefins including polyalpha olefins, linear and branch olefins and the like, polydiorganosiloxanes, siloxanes, or organosiloxanes, esters of fatty acids, specifically straight chain, branched and cyclical alkyl ethers of fatty acids, mixtures thereof and similar compounds known to one of skill in the art; and mixtures thereof. In a particular embodiment, the fluids may be formulated using diesel oil or a synthetic oil as the external phase. The concentration of the oleaginous fluid should be sufficient so that an invert emulsion forms and may be less than about 50% by volume of the invert emulsion. In one embodiment the amount of oleaginous fluid is from about 50% to about 20% by volume and more preferably about 40% to about 20% by volume of the invert emulsion fluid. The oleaginous fluid in one embodiment may include at least 5% by volume of a material selected from the group including esters, ethers, acetals, dialkylcarbonates, hydrocarbons, and combinations thereof.

The non-oleaginous fluid used in the formulation of the invert emulsion fluid disclosed herein is a liquid and preferably is an aqueous liquid. More preferably, the non-oleaginous liquid may be selected from the group including sea water, a brine containing organic and/or inorganic dissolved salts, liquids containing water-miscible organic compounds and combinations thereof. For example, the aqueous fluid may be formulated with mixtures of desired salts in fresh water. Such salts may include, but are not limited to alkali metal chlorides, hydroxides, or carboxylates, for example. In various embodiments of the drilling fluid disclosed herein, the brine may include seawater, aqueous solutions wherein the salt concentration is less than that of sea water, or aqueous solutions wherein the salt concentration is greater than that of sea water. Salts that may be found in seawater include, but are not limited to, sodium, calcium, aluminum, magnesium, potassium, strontium, and lithium, salts of chlorides, bromides, carbonates, iodides, chlorates, bromates, formates, nitrates, oxides, phosphates, sulfates, silicates, and fluorides. Salts that may be incorporated in a given brine include any one or more of those present in natural seawater or any other organic or inorganic dissolved salts. Additionally, brines that may be used in the drilling fluids disclosed herein may be natural or synthetic, with synthetic brines tending to be much simpler in constitution. In one embodiment, the density of the drilling fluid may be controlled by increasing the salt concentration in the brine (up to saturation). In a particular embodiment, a brine may include halide or carboxylate salts of mono- or divalent cations of metals, such as cesium, potassium, calcium, zinc, and/or sodium.

The amount of the non-oleaginous fluid is typically less than the theoretical limit needed for forming an invert emulsion. Thus in one embodiment the amount of non-oleaginous fluid is more than about 50% by volume and preferably from about 50% to about 80% by volume. In another embodiment, the non-oleaginous fluid is preferably from about 60% to about 80% by volume of the invert emulsion fluid.

Conventional methods can be used to prepare the drilling fluids disclosed herein in a manner analogous to those normally used, to prepare conventional oil-based drilling fluids. In one embodiment, a desired quantity of oleaginous fluid such as a base oil and a suitable amount of a surfactant are mixed together and the remaining components are added sequentially with continuous mixing. An invert emulsion may also be formed by vigorously agitating, mixing or shearing the oleaginous fluid and the non-oleaginous fluid.

Other additives that may be included in the wellbore fluids disclosed herein include for example, wetting agents, organophilic clays, viscosifiers, surfactants, dispersants, interfacial tension reducers, pH buffers, mutual solvents, thinners, thinning agents and cleaning agents. The addition of such agents should be well known to one of ordinary skill in the art of formulating drilling fluids and muds.

Wetting agents that may be suitable for use in the fluids disclosed herein include crude tall oil, oxidized crude tall oil, surfactants, organic phosphate esters, modified imidazolines and amidoamines, alkyl aromatic sulfates and sulfonates, and the like, and combinations or derivatives of these. However, when used with the invert emulsion fluid, the use of fatty acid wetting agents should be minimized so as to not adversely affect the reversibility of the invert emulsion disclosed herein. FAZE-WET™, VERSACOAT™, SUREWET™, VERSAWET™, and VERSAWET™ NS are examples of commercially available wetting agents manufactured and distributed by M-I L.L.C. that may be used in the fluids disclosed herein. Silwet L-77, L-7001, L7605, and L-7622 are examples of commercially available surfactants and wetting agents manufactured and distributed by General Electric Company (Wilton, CT).

Organophilic clays, normally amine treated clays, may be useful as viscosifiers and/or emulsion stabilizers in the fluid composition disclosed herein. Other viscosifiers, such as oil soluble polymers, polyamide resins, polycarboxylic acids and soaps can also be used. The amount of viscosifier used in the composition can vary upon the end use of the composition. However, normally about 0.1% to 6% by weight range is sufficient for most applications. VG-69™ and VG-PLUS™ are organoclay materials distributed by M-I, L.L.C., Houston, Texas, and VERSA-HRP™ is a polyamide resin material manufactured and distributed by M-I, L.L.C., that may be used in the fluids disclosed herein. In some embodiments, the viscosity of the displacement fluids is sufficiently high such that the displacement fluid may act as its own displacement pill in a well.

Conventional suspending agents that may be used in the fluids disclosed herein include organophilic clays, amine treated clays, oil soluble polymers, polyamide resins, polycarboxylic acids, and soaps. The amount of conventional suspending agent used in the composition, if any, may vary depending upon the end use of the composition. However, normally about 0.1% to about 6% by weight is sufficient for most applications. VG-69™ and VG-PLUS™ are organoclay materials distributed by M-I L.L.C., and VERSA-HRP™ is a polyamide resin material manufactured and distributed by M-I L.L.C., that may be used in the fluids disclosed herein.

Additionally, lime or other alkaline materials are typically added to conventional invert emulsion drilling fluids and muds to maintain a reserve alkalinity.

The fluids disclosed herein are especially useful in the drilling, completion and working over of subterranean oil and gas wells. In particular the fluids disclosed herein may find use in formulating drilling muds and completion fluids that allow for the easy and quick removal of the filter cake. Such muds and fluids are especially useful in the drilling of horizontal wells into hydrocarbon bearing formations.

In various embodiments, methods of drilling a subterranean hole with an invert emulsion drilling fluid may comprise mixing an oleaginous fluid, a non-oleaginous fluid, an emulsifier, such as those described above, and in the ratios described above, to form an invert emulsion; and drilling the subterranean hole using this invert emulsion as the drilling fluid. The fluid may be pumped down to the bottom of the well through a drill pipe, where the fluid emerges through ports in the drilling bit, for example. In one embodiment, the fluid may be used in conjunction with any drilling operation, which may include, for example, vertical drilling, extended reach drilling, and directional drilling. One skilled in the art would recognize that oil-based drilling muds may be prepared with a large variety of formulations. Specific formulations may depend on the state of drilling a well at a particular time, for example, depending on the depth and/or the composition of the formation.

### EXAMPLE

The following examples were used to test the stability and rheological properties of a high internal phase ratio invert emulsion, such as those described in the present disclosure.

### Example 1

Various high internal phase ratio invert emulsions were formulated having the following components, as shown below in Table 1A and 1B. Specifically, the components include a C16-C18 internal olefin as the base oil, various brines having densities as described below) SUREWET®, a secondary emulsifier available from M-I L.L.C. (Houston, Texas); and EMI-2184, an alkoxylated ether acid emulsifier available from M-I L.L.C. (Houston, Texas). Samples 1-3 show the lack of effect of brine type on emulsion stability, while samples 4-6 investigate the effect of increasing salt density on the emulsion stability. Samples 7-9 investigate the effect of the amount of emulsifier on a 30/70 O/W ratio, and Samples 10-12 investigate the effect of the O/W ratio (50/50, 40/60, and 30/70).

**Table 1A**

| Components | 1 | 2 | 3 | 4 | 5 | 6 |
|---|---|---|---|---|---|---|
| 10 C16-C18 (mL) | 72 | 72 | 72 | 92 | 92 | 92 |
| CaCl₂ brine (mL) | 287 (11.2 ppg) | -- | -- | 233 (11.6 ppg) | -- | -- |
| K-formate brine (mL) | -- | 287 (11.2 ppg) | -- | -- | 233 (13.7 ppg) | -- |
| CaBr₂ brine (mL) | -- | -- | 287 (11.2 ppg) | -- | -- | 233 (14.2 ppg) |
| SUREWET® (g) | 2 | 2 | 2 | 2 | 2 | 2 |
| EMI-2184 (g) | 9 | 9 | 9 | 9 | 9 | 9 |
| Lime (g) | 2 | 2 | 2 | 2 | 2 | 2 |
| Barite (g) | 47 | 47 | 47 | 47 | 47 | 47 |

**Table 1B**

| Components | 7 | 8 | 9 | 10(50/50) | 11 (40/60) | 12 (30/70) |
|---|---|---|---|---|---|---|
| 10 C16-C18 (mL) | 92 | 92 | 92 | 119 | 96 | 72 |
| 25% CaCl₂ brine (mL) | 233 | 233 | 233 | 53 | 64 | 76 |
| SUREWET® (g) | 2 | 2 | 2 | 2 | 2 | 2 |
| EMI-2184 (g) | 2 | 4 | 6 | 9 | 9 | 9 |
| Lime(g) | 2 | 2 | 2 | 2 | 2 | 2 |
| Barite (g) | 47 | 47 | 47 | 85 | 85 | 85 |

The invert emulsion fluids shown in Table 1 were heat aged at the temperatures shown below in Table 2A and 2B by hot rolling for 16 hours, and the rheological properties of the various mud formulations were determined using a Fann Model 35 Viscometer, available from Fann Instrument Company. The fluid exhibited the following properties, as shown below in Table 2A and 2B.

**Table 2A**

| | Sample Nos. | | | | | | | | | | | |
|---|---|---|---|---|---|---|---|---|---|---|---|---|
| | 1 | | 2 | | 3 | | 4 | | 5 | | 6 | |
| Heat Aging (°C(°F)) | 66(150) | 149(300) | 66 (150) | 149(300) | 66(150) | 149(300) | 66(150) | 121(250) | 66(150) | 121(250) | 66(150) | 121(250) |
| 600 RPM | 120 | 139 | 156 | 185 | 124 | 132 | 181 | 163 | 145 | 163 | Direct | -- |
| 300 RPM | 75 | 88 | 99 | 120 | 77 | 84 | 114 | 101 | 90 | 101 | Emul | -- |
| 200 RPM | 57 | 68 | 74 | 94 | 57 | 59 | 89 | 76 | 67 | 76 | -- | -- |
| 100 RPM | 35 | 42 | 47 | 60 | 35 | 41 | 57 | 46 | 41 | 46 | -- | -- |
| 6 RPM | 8 | 15 | 11 | 16 | 8 | 9 | 12 | 10 | 9 | 11 | -- | -- |
| 3 RPM | 6 | 12 | 10 | 14 | 7 | 7 | 9 | 8 | 7 | 9 | -- | -- |
| 10 s gel | 7 | 8 | 10 | 10 | 7 | 7 | 10 | 9 | 8 | 10 | -- | -- |
| 10m gel | 7 | 8 | 11 | 12 | 8 | 7 | 10 | 8 | 9 | 10 | -- | -- |
| PV(cP) | 45 | 51 | 57 | 65 | 47 | 48 | 67 | 62 | 55 | 62 | -- | -- |
| YP (Pa (lb/100ft²)) | 14 (30) | 18(37) | 20(42) | 26 (55) | 14 (30) | 17 (36) | 22(47) | 19 (39) | 17 (35) | 19(39) | -- | -- |
| ES (v) | 198 | 152 | 148 | 160 | 207 | 120 | 164 | 94 | 35 | 54 | 6 | -- |

**Table 2B**

| | Sample Nos. | | | | | | | | | |
|---|---|---|---|---|---|---|---|---|---|---|
| | 7 | | 8 | | 9 | | 10 | 11 | 12 | |
| Heat Aging (°C(°F)) | 66(150) | 121 (250) | 66(150) | 121 (250) | 66 (150) | 121 (250) | 66 (150) | 66(150) | 66 (150) | 149(300) |
| 600 RPM | 270 | 196 | 134 | 153 | 153 | 160 | 52 | 91 | 172 | 150 |
| 300 RPM | 182 | 126 | 84 | 98 | 98 | 101 | 28 | 53 | 103 | 89 |
| 200 RPM | 139 | 96 | 64 | 76 | 76 | 78 | 19 | 36 | 75 | 64 |
| 100 RPM | 94 | 60 | 41 | 46 | 46 | 49 | 11 | 20 | 46 | 38 |
| 6 RPM | 28 | 12 | 8 | 8 | 10 | 11 | 3 | 5 | 9 | 7 |
| 3 RPM | 21 | 10 | 6 | 7 | 8 | 9 | 2 | 4 | 7 | 6 |
| 10 s gel | 20 | 10 | 7 | 7 | 9 | 8 | 3 | 5 | 7 | 7 |
| 10m gel | 21 | 10 | 8 | 8 | 9 | 9 | 4 | 6 | 8 | 8 |
| PV(cP) | 88 | 70 | 50 | 55 | 55 | 59 | 24 | 38 | 69 | 61 |
| YP (Pa (lb/100ft²)) | 45 (94) | 27(56) | 16(34) | 25 (53) | 21 (43) | 20(42) | 1.9(4) | 7.2 (15) | 16(34) | 13(28) |
| ES (v) | 25 | 55 | 70 | 117 | 103 | 201 | 232 | 207 | 130 | 220 |

A high internal phase ratio invert emulsion fluid according to the present disclosure was formed and compared to an invert emulsion fluid at the same phase ratio, but with a conventional emulsifier, SUREMUL™, available from M-I L.L.C. (Houston, Texas). The sample and comparative sample were formulated having the following components, as shown below in Table 3.

**Table 3**

| Components | 13 | CS1 |
|---|---|---|
| IO C16-C18 (mL) | 70.61 | 70.61 |
| CaCl₂ (g) | 74 | 74 |
| Water | 208 | 208 |
| SUREMUL™ (g) | -- | 9 |
| SUREWET™ (g) | 2 | 2 |
| EMI-2184 (g) | 9 | -- |
| Lime (g) | 2 | 2 |
| Barite (g) | 75.75 | 75.75 |

The invert emulsion fluids shown in Table 3 were heat aged at 66 °C(150 °F) by hot rolling for 16 hours, and the rheological properties of the various mud formulations were determined at 49 °C(120 °F)using a Fann Model 35 Viscometer, available from Fann Instrument Company. The fluid exhibited the following properties, as shown below in Table 4.

**Table 4**

| | 13 | CS1 |
|---|---|---|
| 600 RPM | 171 | >300 |
| 300 RPM | 106 | 210 |
| 6 RPM | 11 | 41 |
| 3 RPM | 9 | 33 |
| 10 s gel | 9 | 31 |
| 10m gel | 10 | 34 |
| PV (cP) | 65 | N/A |
| YP (Pa (lb/100ft²)) | 20 (41) | N/A |
| ES (v) | 287 | 110 |

### Example 2

Various high internal phase ratio invert emulsions were formulated having the following components, as shown below in Table 5. Specifically, the components include a C16-C18 internal olefin as the base oil, various brines having densities as described below) SUREWET™, a secondary emulsifier available from M-I L.L.C. (Houston, Texas); and DANOX-20, DANOX-21, and DANOX-22, alkoxylated ether carboxylic acid emulsifiers available from Kao Corporation (Tokyo, Japan). DANOX-20, DANOX-21, and DANOX-22 possess the same chemistry with differing amount of ethoxylation (and thus molecular weight and HLB).

**Table 5**

| Components | 13 | 14 | 15 |
|---|---|---|---|
| 10 C16-C18 (mL) | 72 | 72 | 72 |
| CaCl₂ brine (mL) | 76 | 76 | 76 |
| Water | 212 | 212 | 212 |
| SUREWET® (g) | 2 | 2 | 2 |
| DANOX-20 (g) | 9 | -- | -- |
| DANOX-21 (g) | -- | 9 | -- |
| DANOX-21 (g) | -- | -- | 9 |
| Lime (g) | 2 | 2 | 2 |
| Barite (g) | 47 | 47 | 47 |

The invert emulsion fluids shown in Table 5 were heat aged at the temperatures shown below in Table 6 by hot rolling for 16 hours, and the rheological properties of the various mud formulations were determined using a Fann Model 35 Viscometer, available from Fann Instrument Company. The fluid exhibited the following properties, as shown below in Table 6.

**Table 6**

| | Sample Nos. | | | | | |
|---|---|---|---|---|---|---|
| | 13 | | 14 | | 15 | |
| Heat Aqing (°C(°F)) | 66(150) | 121(250) | 66(150) | 121(250) | 66(150) | 121 (250) |
| 600 RPM | 143 | 167 | 134 | 173 | 136 | 160 |
| 300 RPM | 89 | 102 | 82 | 105 | 85 | 99 |
| 200 RPM | 67 | -- | 61 | -- | 64 | -- |
| 100 RPM | 42 | -- | 36 | -- | 38 | -- |
| 6 RPM | 9 | 11 | 7 | 10 | 8 | 10 |
| 3 RPM | 7 | 8 | 6 | 7 | 7 | 8 |
| 10 s gel | 7 | 8 | 6 | 8 | 7 | 8 |
| 10m gel | 7 | 9 | 6 | 8 | 8 | 9 |
| PV(cP) | 54 | 65 | 52 | 68 | 51 | 61 |
| YP (Pa (lb/100ft²)) | 17(35) | 18 (37) | 14 (30) | 18 (37) | 16 (34) | 18(38) |
| ES (v) | 185 | 200 | 150 | 171 | 167 | 181 |

Advantageously, embodiments of the present disclosure may provide invert emulsion fluids having a high internal phase concentration (< 50/50 O/W), which are stabilized by an emulsifying agent without significant increases in viscosity. Additional by virtue of the greater internal phase concentration, weight may be provided to the fluid partly through the inherent weight of the aqueous or other internal phase, thus minimizing the total solid content. Further, by using a reduced oleaginous fluid volume per barrel of fluid, the cost of the fluid may be minimized.

## Claims

1. An invert emulsion well bore fluid comprising:
an oleaginous external phase;
a non-oleaginous internal phase, wherein a ratio of the oleaginous external phase and non-oleaginous internal phase is less than 50:50; and
an emulsifier stabilizing the oleaginous external phase and the non-oleaginous internal phase, wherein an average diameter of the non-oleaginous internal phase ranges from 0.5 to 5 microns;
**characterised in that** the emulsifier is an alkoxylated ether acid.

2. The invert emulsion fluid of claim 1, wherein the alkoxylated ether acid is an alkoxylated fatty alcohol terminated with an acetic acid.

3. The invert emulsion fluid of claim 1, wherein the alkoxylated ether acid is represented by the following formula: 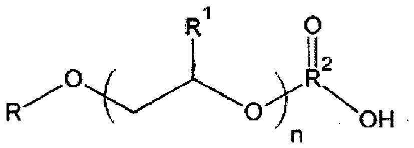 where R is C₆-C₂₄ or -C(O)R³ (where R³ is C₁₀-C₂₂), R¹ is H or C₁-C₄, R² is C₁-C₅ and n may range from 1 to 20.

4. The invert emulsion fluid of claim 3, wherein when R¹ is H, n is a value up to 10, and preferably n ranges between 2 and 5.

5. The invert emulsion fluid of claim 3, wherein when R¹ is -CH₃ n is a value up to 20.

6. The invert emulsion fluid of claim 1, wherein the ratio of the oleaginous external phase to non-oleaginous internal phase is less than 40:60, and preferably is less than 30:70.

7. The invert emulsion fluid of claim 1, wherein the emulsifier is used in an amount ranging from 5.7 to 28.5 kg/m³ (2 to 10 pounds per barrel).

8. The invert emulsion fluid of claim 1, wherein the fluid has a viscometer reading of less than 200 measured at 600 rpm using a Fann 35 Viscometer from Fann Instrument Company (Houston, Texas) at 48.9°C (120°F), and a viscometer reading of less than 40 measured at 6 and 3 rpm using a Fann 35 Viscometer from Fann Instrument Company (Houston, Texas) at 48.9°C (120°F).

9. The invert emulsion fluid of claim 1, wherein the fluid has an electrical stability of at least 50 v.

10. The invert emulsion fluid of claim 1, wherein the average diameter ranges from 1 to 3 microns.

11. A method of drilling a subterranean hole with an invert emulsion drilling fluid, comprising:
mixing an oleaginous fluid, a non-oleaginous fluid, an emulsifier, to form an invert emulsion of any one of the previous claims; and
drilling the subterranean hole using said invert emulsion as the drilling fluid.

## Patentansprüche

1. Invertierte Emulsion als Bohrlochflüssigkeit, die Folgendes umfasst:
eine ölige äußere Phase;
eine nicht-ölige innere Phase, wobei das Verhältnis von öliger äußerer zu nicht-öliger innerer Phase weniger als 50:50 beträgt, und
einen Emulgator, der die ölige äußere Phase und die nicht-ölige innere Phase stabilisiert, wobei der mittlere Durchmesser der nicht-öligen inneren Phase im Bereich von 0,5 bis 5 µm liegt;
**dadurch gekennzeichnet, dass** der Emulgator eine alkoxylierte Ethersäure ist.

2. Invertierte Emulsion als Bohrlochflüssigkeit nach Anspruch 1, worin die alkoxylierte Ethersäure ein alkoxylierter Fettalkohol mit einer endständigen Essigsäure ist.

3. Invertierte Emulsion als Bohrlochflüssigkeit nach Anspruch 1, worin die alkoxylierte Ethersäure der folgenden Formel entspricht: 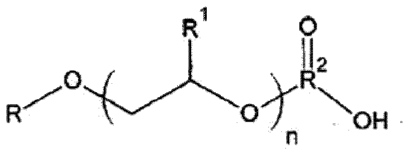 worin R C₆-C₂₄ oder -C(O)R³ ist (worin R³ C₁₀-C₂₂ ist), R¹ H oder C₁-C₄ ist, R² C₁-C₅ ist und n im Bereich von 1 bis 20 liegen kann.

4. Invertierte Emulsion als Bohrlochflüssigkeit nach Anspruch 3, worin R¹ H ist, n ein Wert bis zu 10 ist und n vorzugsweise im Bereich zwischen 2 und 5 liegt.

5. Invertierte Emulsion als Bohrlochflüssigkeit nach Anspruch 3, worin R¹ -CH₃ ist und n ein Wert von bis zu 20 ist.

6. Invertierte Emulsion als Bohrlochflüssigkeit nach Anspruch 1, worin das Verhältnis von öliger äußerer zu nicht-öliger innerer Phase weniger als 40:60 und vorzugsweise weniger als 30:70 beträgt.

7. Invertierte Emulsion als Bohrlochflüssigkeit nach Anspruch 1, worin der Emulgator in einer Menge im Bereich von 5,7 bis 28,5 kg/m³ (2 bis 10 Pfund/Barrel) eingesetzt wird.

8. Invertierte Emulsion als Bohrlochflüssigkeit nach Anspruch 1, worin die Flüssigkeit bei 600 U/min unter Verwendung eines Fann-35-Viskosimeters von der Fann Instrument Company (Houston, Texas) bei 48,9 °C (120 °F) ein Viskosimetermessergebnis von weniger als 200 aufweist und bei 6 und 3 U/min unter Verwendung eines Fann-35-Viskosimeters von der Fann Instrument Company (Houston, Texas) bei 48,9 °C (120 °F) ein Viskosimetermessergebnis von weniger als 40 aufweist.

9. Invertierte Emulsion als Bohrlochflüssigkeit nach Anspruch 1, worin die Flüssigkeit eine elektrische Stabilität von zumindest 50 V aufweist.

10. Invertierte Emulsion als Bohrlochflüssigkeit nach Anspruch 1, worin der mittlere Durchmesser im Bereich von 1 bis 3 µm liegt.

11. Verfahren zum Bohren eines unterirdischen Lochs unter Verwendung einer invertierten Emulsion als Bohrlochflüssigkeit, wobei das Verfahren Folgendes umfasst:
das Mischen einer öligen Flüssigkeit, einer nicht-öligen Flüssigkeit, eines Emulgators zur Bildung einer invertierten Emulsion nach einem der vorangegangenen Ansprüche und
das Bohren des unterirdischen Lochs unter Verwendung der invertierten Emulsion als Bohrspülung.

## Revendications

1. Fluide de forage en émulsion inversée comprenant :
une phase externe oléagineuse ;
une phase interne non oléagineuse, le rapport de la phase externe oléagineuse à la phase interne non oléagineuse étant inférieur à 50/50 ; et
un émulsionnant stabilisant la phase externe oléagineuse et la phase interne non oléagineuse, le diamètre moyen de la phase interne non oléagineuse étant situé dans la plage allant de 0,5 à 5 micromètres ;
**caractérisé en ce que** l'émulsionnant est un acide d'éther alcoxylé.

2. Fluide en émulsion inversée selon la revendication 1, dans lequel l'acide d'éther alcoxylé est un alcool gras alcoxylé à terminaison acide acétique.

3. Fluide en émulsion inversée selon la revendication 1, dans lequel l'acide d'éther alcoxylé est représenté par la formule suivants : 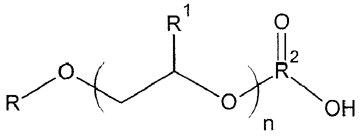 dans laquelle R est en C₆ à C₂₄ ou est -C(O)R³ (où R³ est en C₁₀ à C₂₂), R¹ est H ou en C₁ à C₄, R² est en C₁ à C₅ et n peut aller de 1 à 20.

4. Fluide en émulsion inversée selon la revendication 3, dans lequel R¹ est H, n vaut jusqu'à 10, et de préférence n est compris entre 2 et 5.

5. Fluide en émulsion inversée selon la revendication 3, dans lequel R¹ est -CH₃ et n vaut jusqu'à 20.

6. Fluide en émulsion inversée selon la revendication 1, dans lequel le rapport de la phase externe oléagineuse à la phase interne non oléagineuse est inférieur à 40/60, de préférence inférieur à 30/70.

7. Fluide en émulsion inversée selon la revendication 1, dans lequel l'émulsionnant est utilisé en une quantité allant de 5,7 à 28,5 kg/m³ (2 à 10 livres par baril).

8. Fluide en émulsion inversée selon la revendication 1, lequel fluide a une lecture au viscosimètre inférieure à 200 lors d'une mesure à 600 t/min utilisant un viscosimètre Fann 35 de Fann Instrument Company (Houston, Texas) à 48,9°C (120°F), et une lecture au viscosimètre inférieure à 40 lors d'une mesure à 6 et 3 t/min utilisant un viscosimètre Fann 35 de Fann Instrument Company (Houston, Texas) à 48,9°C (120°F).

9. Fluide en émulsion inversée selon la revendication 1, lequel fluide a une stabilité électrique d'au moins 50 V.

10. Fluide en émulsion inversée selon la revendication 1, dans lequel le diamètre moyen est situé dans la plage allant de 1 à 3 micromètres.

11. Procédé pour forer un trou souterrain avec un fluide de forage en émulsion inversée, comprenant :
le mélange d'un fluide oléagineux, d'un fluide non oléagineux, d'un émulsionnant, pour former une émulsion inversée selon l'une quelconque des revendications précédentes ; et
le forage du trou souterrain par utilisation de ladite émulsion inversée en tant que fluide de forage.
